# EUROPÄISCHE PATENTSCHRIFT

(11) **EP 0 899 852 B1**
(45) Veröffentlichungstag und Bekanntmachung des Hinweises auf die Patenterteilung: **30.10.2002**
(21) Anmeldenummer: 98115286.1
(22) Anmeldetag: 13.08.1998
(51) Int. Cl.: H02K 5/06, H02K 5/20

(54) **Gegossenes Formteil eines Elektromotors**
Die cast of an electrical motor
Moulage coulé d'un moteur électrique

(30) Priorität: 26.08.1997 DE 19737164
(43) Veröffentlichungstag der Anmeldung: 03.03.1999
(73) Patentinhaber: SIEMENS AKTIENGESELLSCHAFT, 80333 München (DE)
(72) Erfinder: Hilneder, Siegfried, 91126 Schwabach (DE)

(56) Entgegenhaltungen:
- US-A- 5 019 737
- PATENT ABSTRACTS OF JAPAN vol. 018, no. 504 (E-1608), 21. September 1994 & JP 06 169542 A (TOSHIBA CORP), 14. Juni 1994
- PATENT ABSTRACTS OF JAPAN vol. 096, no. 002, 29. Februar 1996 & JP 07 264802 A (HITACHI LTD), 13. Oktober 1995

## Beschreibung

Die Erfindung betrifft ein gegossenes Formteil eines Elektromotors mit einem mindestens ein Blechpaket aufweisenden Ständer, insbesondere eine durchzugsbelüfteten innengekühlten Elektromotors, welches Formteil in axialer Richtung des Elektromotors verlaufende Rippen aufweist.

Bei Elektromotoren mit Durchzugsbelüftung wird das Ständerblechpaket auf den Innenrippen fest und paßgenau gehalten. Die Innenrippen sind je nach Baugröße, Leistung und Höhe sowie Anzahl so ausgelegt, daß eine ausreichende Durchlüftung Seitenstabilität und Steifigkeit beim Betrieb und der Bearbeitung vorhanden ist.

Zur Realisierung dieser Vorgaben wurden diese Ständergehäuse gemäß EP 0 046 315 im kostenintensiven Schweißverfahren hergestellt. Das Gewicht dieses Gehäuses erschwert dadurch zusätzlich die Montage der Maschine. Im Gußverfahren werden bisher, wie im AEG-Handbuch Band 1 (Drehstromasychronmotoren) 1965, auf Seite 44 gezeigt, nur Einzelkomponenten hergestellt.

Die Aufgabe der Erfindung besteht darin, eine wirtschaftliche Gußausführung für Gehäuseinnenrippen zu schaffen, die eine hohe Seitenstabilität aufweisen und Halt für das Ständerblechpaket bieten, ohne dabei den Kühleffekt des Luftstroms wesentlich zu beeinträchtigen. Zusätzlich sollen Möglichkeiten geschaffen werden weitere Turbulenzen in den Strömungskanälen zu erzeugen.

Die Lösung der gestellten Aufgabe gelingt daduch, daß das Formteil ein Ständergehäuse mit mindestens einer schraubenförmig verlaufenden und/oder mit mindestens einer in axialer Richtung mäander-oder wellenförmigen Gehäuseinnenrippe bildet.

Durch diese Ausgestaltung der Innenrippen ergibt sich eine breite Anbindung an den Ständergehäusemantel. Das führt zu einer erhöhten Quersteifigkeit im Betrieb, wie auch bei der Bearbeitung. Die Gestaltung der Innenrippen ohne Versteifungsring läßt somit eine ungehinderte axiale Luftströmung zu, was zu einer kompakten, verwindungssteifen Bauweise des Elektromotors führt.

Gießtechnisch lassen sich in idealer Weise die Wanddicken und Rippendicken ohne größere Gußanhäufungen gestalten; die Anzahl der Rippen läßt sich nahezu uneingeschränkt erhöhen. Die Ausführbarkeit größerer Leistungen und Achshöhen sind dadurch gegeben.

Die technischen Merkmale der weiteren Ansprüche führen zu zusätzlichen Kühleffekten aufgrund der erzeugten Turbulenzen. Desweiteren wird durch die günstige Gestaltung der Innenrippen der Modellaufbau einfach, die Modellkosten werden reduziert, der Abguß der Gehäuse erreicht eine sehr hohe Wiederholqualität und kann entsprechend kostengünstig kalkuliert werden.

Die Erfindung sowie weitere vorteilhafte Ausgestaltungen der Erfindung gemäß den Merkmalen der Unteransprüche werden im folgenden anhand eines schematisch dargestellten Ausführungsbeispiels in der Zeichnung näher erläutert; darin zeigt:
- FIG 1: den Querschnitt einer gegossenen Ständergehäusehälfte,
- FIG 2: den Längsschnitt einer gegossenen Ständergehäusehälfte

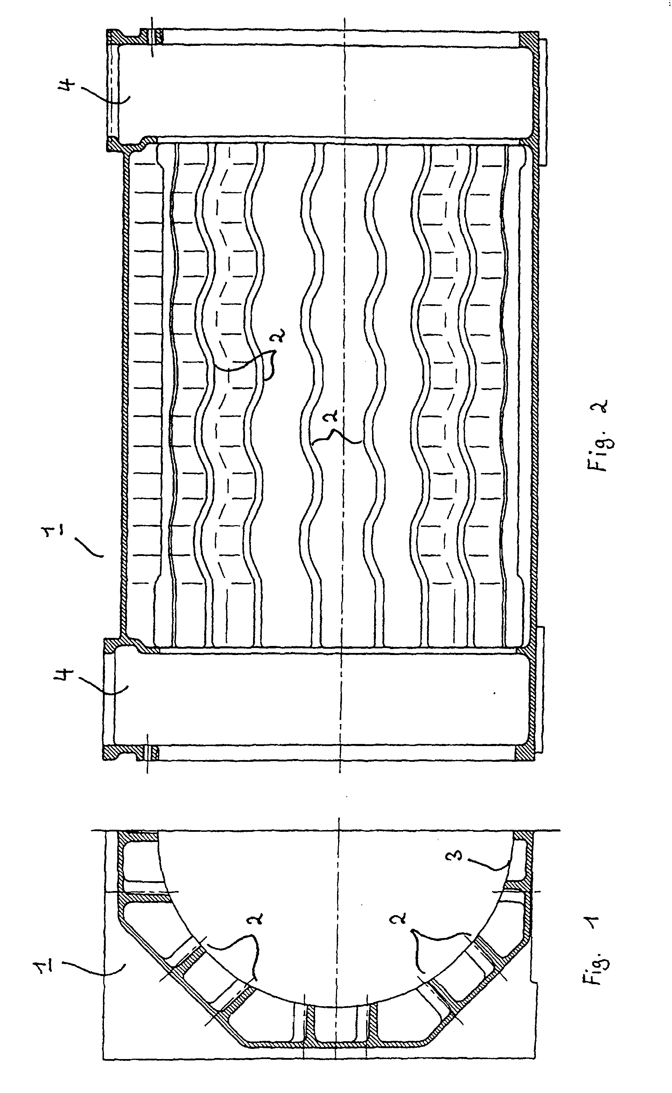

FIG 1 zeigt im Querschnitt eine gegossene Ständergehäusehälfte 1 eines Motors größere Achshöhe und Leistung, z.B. eines Hochspannungsmotors mit paarweise angeordneten, wellenförmigen Gehäuseinnenrippen 2 , die am Umfang eines nicht dargestellten Blechpaketes 3 angeordnet sind.

FIG 2 zeigt im Längsschnitt eines derartigen Ständergehäuses 1 den mäander- oder wellenförmigen Verlauf der paarweise angeordneten Gehäuseinnenrippen 2, die auf beiden Seiten durch den Luftzugraum bzw. Luftdruckraum 4 der elektrischen Maschine begrenzt sind. Durch die dabei gewonnene erhöhte Quersteifigkeit des Ständergehäuses im Betrieb, wird das Schwingverhalten auch bei der Bearbeitung (z.B. bei spanabhebenden oder anderen oberflächenveränderbaren Arbeitsschritten) des Blechpaketsitzes günstiger und läßt eine hohe Maßhaltigkeit sowie schnellere und leisere Zerspannbarkeit erwarten.

Mehr- oder paarweise Anordnungen der Gehäuseinnenrippen lassen eine günstige und schnelle Ausformung aus der Sandform zu. Es werden dadurch Fertigungszeit und Formteile eingespart. Die Anordnung mehrerer Innenrippen als zwei kann für Motoren größerer Achshöhe und Leistungen von Vorteil sein.

Ferner sind Modifikationen und Variationen basierend auf den Inhalt der beigefügten Ansprüche möglich.

## Patentansprüche

1. Gegossenes Formteil (1) eines Elektromotors mit einem mindestens ein Blechpaket (3) aufweisenden Ständer, insbesondere eines durchzugsbelüfteten innengekühlten Elektromotors, welches Formteil (1) in axialer Richtung des Elektromotors verlaufende Rippen (2) aufweist, **dadurch gekennzeichnet, dass** das Formteil ein Ständergehäuse (1) mit mindestens einer schraubenförmig verlaufenden und/oder mit mindestens einer in axialer Richtung mäander-oder wellenförmigen Gehäuseinnenrippe (2) bildet.

2. Gegossenes Formteil (1) nach Anspruch 1, **dadurch gekennzeichnet, daß** die Gehäuseinnenrippe (2) am Gehäuseinnenmantel des Ständergehäuses (1) schraubenförmig verläuft.

3. Gegossenes Formteil (1) nach Anspruch 2, **dadurch gekennzeichnet, daß** die Gehäuseinnenrippe (2) nur einen Bruchteil eines Gewindeganges dieser Schraubenlinie durchläuft.

4. Gegossenes Formteil (1) nach einem der vorhergehenden Ansprüche, **dadurch gekennzeichnet, daß** die Gehäuseinnenrippe (2) mindestens einen Abschnitt mit reduzierter Rippenhöhe aufweist.

5. Gegossenes Formteil (1) nach Anspruch 4, **dadurch gekennzeichnet, daß** der Übergang zwischen verschiedenen Rippenhöhen stetig oder unstetig verläuft.

6. Gegossenes Formteil (1) nach Anspruch 4 oder 5, **dadurch gekennzeichnet, daß** die Stellen der Gehäuseinnenrippen (2) mit reduzierter Rippenhöhe, derart angeordnet sind, daß sich neben dem Hauptdurchzugskanal ein in Strömungsrichtung schraubenförmiger Kanal ergibt.

7. Gegossenes Formteil (1) nach einem der vorhergehenden Ansprüche , **dadurch gekennzeichnet, daß** die Gehäuseinnenrippen (2) in axialer Richtung einen V-förmigen und/oder rechteckigen Querschnitt aufweisen.

8. Gegossenes Formteil (1) nach einem der vorhergehenden Ansprüche, **dadurch gekennzeichnet, daß** die Gehäuseinnenrippen (2) eine im wesentlichen radiale Ausrichtung aufweisen.

9. Gegossenes Formteil (1) nach einem der vorhergehenden Ansprüche, **dadurch gekennzeichnet, daß** die Gehäuseinnenrippen (2) hohl ausgeführt sind.

10. Gegossenes Formteil (1) nach einem der vorhergehenden Ansprüche, **dadurch gekennzeichnet, daß** das Ständergehäuse (1) axial teilbar ausgeführt ist und die Gehäuseinnenrippen (2) jedes Ständergehäuseteiles (1) zumindest paarweise eine Hauptvorzugsrichtung aufweisen.

## Claims

1. Cast moulded part (1) of an electric motor with a stator having at least one laminated core (3), in particularly of an enclosed-ventilated internally cooled electric motor, said moulded part (1) having ribs (2) running in the axial direction of the electric motor, **characterised in that** the moulded part forms a stator housing (1) with at least one helical and/or at least one meander-shaped or wave-shaped internal housing rib (2) in the axial direction.

2. Cast moulded part (1) according to Claim 1, **characterised in that** the internal housing rib (2) runs helically on the internal housing shell of the stator housing (1).

3. Cast moulded part (1) according to Claim 2, **characterised in that** the internal housing rib (2) passes through only a fraction of a thread of this helix.

4. Cast moulded part (1) according to one of the preceding claims, **characterised in that** the internal housing rib (2) has at least one section with reduced rib height.

5. Cast moulded part (1) according to Claim 4, **characterised in that** the transition between different rib heights runs continuously or non-continuously.

6. Cast moulded part (1) according to Claim 4 or 5, **characterised in that** the positions of the internal housing ribs (2) with reduced rib height are arranged such that there is a helical channel in the direction of flow next to the main enclosed-ventilation channel.

7. Cast moulded part (1) according to one of the preceding claims, **characterised in that** the internal housing ribs (2) have a V-shaped and/or rectangular cross-section in the axial direction.

8. Cast moulded part (1) according to one of the preceding claims, **characterised in that** the internal housing ribs (2) are essentially radially orientated.

9. Cast moulded part (1) according to one of the preceding claims, **characterised in that** the internal housing ribs (2) are hollow.

10. Cast moulded part (1) according to one of the preceding claims, **characterised in that** the stator housing (1) is executed so as to be axially divisible and the internal housing ribs (2) of each stator housing part (1) have, at least in pairs, a main preferred direction.

## Revendications

1. Moulage (1) coulé d'un moteur électrique comprenant au moins un stator ayant au moins un paquet (3) de tôles, notamment d'un moteur électrique blindé ventilé à refroidissement intérieur, le moulage (1) ayant des nervures (2) s'étendant dans la direction axiale du moteur électrique, **caractérisé en ce que** le moulage forme une enveloppe (1) de stator ayant au moins une nervure intérieure d'enveloppe s'étendant hélicoïdalement et/ou au moins une nervure (2) d'enveloppe s'étendant sinueusement ou de forme ondulée dans la direction axiale.

2. Moulage (1) coulé suivant la revendication 1, **caractérisé en ce que** la nervure (2) intérieure de l'enveloppe s'étend hélicoïdalement sur la surface latérale intérieure de l'enveloppe (1) du stator.

3. Moulage (1) coulé suivant la revendication 2, **caractérisé en ce que** la nervure (2) intérieure de l'enveloppe ne s'étend que sur une fraction d'un pas de cette ligne hélicoïdale.

4. Moulage (1) coulé suivant l'une des revendications précédentes, **caractérisé en ce que** la nervure (2) intérieure de l'enveloppe a au moins un tronçon de hauteur de nervure réduite.

5. Moulage (1) coulé suivant la revendication 4, **caractérisé en ce que** la transition entre ces hauteurs de nervures différentes s'effectue d'une manière constante ou non constante.

6. Moulage (1) coulé suivant la revendication 4 ou 5, **caractérisé en ce que** les points des nervures (2) intérieures de l'enveloppe de hauteur réduite sont disposés de manière à donner à côté du canal principal de passage un canal hélicoïdal dans la direction du courant.

7. Moulage (1) coulé suivant l'une des revendications précédentes, **caractérisé en ce que** les nervures (2) intérieures de l'enveloppe ont en direction axiale une section transversale en forme de v et/ou rectangulaire.

8. Moulage (1) coulé suivant l'une des revendications précédentes, **caractérisé en ce que** les nervures (2) intérieures de l'enveloppe ont une direction sensiblement radiale.

9. Moulage (1) coulé suivant l'une des revendications précédentes, **caractérisé en ce que** les nervures (2) intérieures de l'enveloppe sont creuses.

10. Moulage (1) coulé suivant l'une des revendications précédentes, **caractérisé en ce que** l'enveloppe (1) du stator est réalisée de manière à pouvoir être fendue axialement et les nervures (2) intérieures de chaque partie (1) de l'enveloppe du stator ont une direction préférentielle principale au moins par paire.
